# EUROPÄISCHE PATENTSCHRIFT

(11) **EP 2 428 796 B1**
(45) Veröffentlichungstag und Bekanntmachung des Hinweises auf die Patenterteilung: **18.03.2015**
(21) Anmeldenummer: 10175936.3
(22) Anmeldetag: 09.09.2010
(51) Int. Cl.: G01N 27/64, H01J 49/10, H01J 49/16, H01J 49/14

(54) **Verfahren und Vorrichtung zur Ionisierung und Identifizierung von Gasen mittels UV-Strahlung und Elektronen**
Method and device for identifying and ionising gases by means of UV-radiation and electrons
Dispositif et procédé d'ionisation et d'identification de gaz moyennant rayonnement à UV et électrons

(43) Veröffentlichungstag der Anmeldung: 14.03.2012
(73) Patentinhaber: Airsense Analytics GmbH, 19061 Schwerin (DE)
(72) Erfinder: Walte, Andreas, Dr., 19059 Schwerin (DE); Münchmeyer, Wolf, 38468 Ehra-Lessien (DE); Ungethüm, Bert, 19059 Schwerin (DE)
(74) Vertreter: Gulde & Partner

(56) Entgegenhaltungen:
- EP-A1- 2 006 672
- EP-A2- 1 070 960
- DE-A1- 10 120 335
- DE-B4- 10 042 394
- GB-A- 2 315 155
- JP-A- 2005 093 152
- US-B1- 6 509 562

## Beschreibung

Die Erfindung bezieht sich auf ein Verfahren und eine Vorrichtung zur lonisierung und Identifizierung von Gasen.

Derartige Verfahren und die dazugehörigen Vorrichtungen zur Detektion und Identifizierung von Gasen werden zur Erkennung und zum Nachweis von chemischen Stoffen oder Verbindungen, insbesondere von explosiven und/oder gesundheitsschädigenden, in sehr geringen Konzentrationen nachzuweisenden Stoffen oder Stoffverbindungen eingesetzt.

Der Nachweis explosiver und/oder toxischer chemischer Verbindungen erfordert Messverfahren mit Nachweisgrenzen im ppt-ppb-Bereich. Zur Erkennung und zum Nachweis dieser chemischen Verbindungen werden deshalb häufig Spektrometer eingesetzt. Dabei kommen lonenmobilitätsspektrometer (IMS) zum Einsatz, bei denen im Gegensatz zu anderen Spektrometern, wie zum Beispiel einem Massenspektrometer, die Detektion der chemischen Stoffe nicht im Vakuum erfolgt und somit keine Vakuumpumpe zur Erzeugung eines Vakuums benötigt wird. Deshalb sind IMS gegenüber anderen Spektrometern in ihrer Bauausführung klein und kostengünstig. Massenspektrometer haben den Vorteil, dass ihre Auflösung und somit ihre Selektivität in der Regel besser als die der IMS ist.

Eine allgemeine Übersicht über IMS und deren Anwendungen finden sich beispielsweise in: G.A. Eiceman und Z. Karpas ,,lon Mobility Spectrometry" (2nd. Edition, CRC, Boca Raton, 2005).

Der Aufbau und die Funktionsweise des IMS sind in einer Vielzahl von Veröffentlichungen beschrieben.

So wird beispielsweise in der US 3,621,240 ein klassisches Flugzeit-IMS vorgestellt, bei dem die unterschiedliche Beweglichkeit von Ionen bei Atmosphärendruck ausgenutzt wird. Dazu werden kontinuierlich in einer lonenquelle die Zielverbindungen ionisiert. Sehr häufig werden radioaktive Quellen verwendet, die direkt Luftmoleküle ionisieren. Diese ionisierten Luftmoleküle reagieren weiter und bilden zusammen mit Wassermolekülen so genannte Reaktant-lonen. Diese Reaktant-lonen reagieren mittels Protonentransfer-, Elektronentransfer- oder Protonenabstraktions-Reaktionen mit den interessierenden Verbindungen und bilden die so genannten Produkt-lonen.

Diese Produkt-lonen werden in einer sehr kurzen Zeitspanne von ca. 200 Mikrosekunden mit Hilfe eines elektrischen Tores in eine Driftröhre eingelassen, welche ein elektrisches Feld aufweist und die lonen in einem Driftgas, üblicherweise gefilterte Luft bei Umgebungsdruck, beschleunigt. Durch die Änderung der Polarität des elektrischen Feldes der Driftstrecke können in einem positiven Betriebsmodus positive lonen und in einem negativen Betriebsmodus negative lonen nachgewiesen werden. Durch das elektrische Feld werden die eingelassenen Produkt-lonen ständig beschleunigt und durch Stöße mit den neutralen Molekülen im Driftgas ständig abgebremst, es stellt sich eine mittlere Driftgeschwindigkeit ein. Durch das elektrische Feld wirkt auf alle lonen mit gleicher Ladung die gleiche Zugkraft. Da aber die Produkt-lonen verschiedene Massen und Stoßquerschnitte aufweisen, erhalten die Produkt-lonen unterschiedliche Driftgeschwindigkeiten im elektrischen Feld. Am Ende der Driftröhre treffen die Produkt-lonen entsprechend der unterschiedlichen Driftgeschwindigkeiten zu unterschiedlichen Zeiten auf einen Detektor auf. Aus den unterschiedlichen Flugzeiten der Produkt-lonen durch die Driftröhre, die typischerweise im Bereich von 5 bis 30 Millisekunden liegen, lassen sich Rückschlüsse auf die untersuchten chemischen Verbindungen ziehen.

Als Startpuls für die Messung der Driftgeschwindigkeit im klassischen Flugzeit-IMS dient der Schaltprozess des elektrischen Tores, welches nur einen Teil der lonen in den Driftraum lässt. Während der Flugzeit kommt es zu einer diffusiven Verbreiterung des eingelassenen lonenpaketes. Das am Detektor gemessene Signal ist dementsprechend in Form einer gaußförmigen Glockenkurve. Aus der gemessenen Flugzeit oder Driftzeit im Maximum der Glockenkurve und der bekannten Länge der Driftstrecke kann die Driftgeschwindigkeit bestimmt werden, wobei ein resultierendes Spektrum zur Identifizierung der chemischen Stoffe oder Verbindungen genutzt werden kann.

Die Flugzeit der Produkt-lonen durch die Driftröhre ist umgekehrt proportional der Driftgeschwindigkeit, mit der die Produkt-lonen auf den Detektor treffen. Die Driftgeschwindigkeit, als Ergebnis der Beschleunigung im elektrischen Feld und der Abbremsung durch Stöße der lonen mit den neutralen Molekülen im Driftgas, ist wiederum abhängig von der lonenmasse bzw. lonengröße und der lonenform.

Neben den klassischen Flugzeit-IMS-Systemen gibt es auch lonenmobilitätsspektrometer, bei denen die lonen durch eine Luftströmung transportiert werden und diese senkrecht zur Gasströmung durch elektrostatische Felder abgelenkt und mittels mehrerer Elektroden nachgewiesen werden. Diese IMS-Systeme, auch "Aspirating IMS" genannt, werden zum Beispiel in kompakter Form von Bäther et.al. (DE 10 2005 007 746 B4) beschrieben.

Wenn senkrecht zur Gasströmung asymmetrische Wechselfelder hoher Feldstärke verwendet werden und die lonen anhand der Feldstärkeabhängigkeit der Mobilität getrennt werden, können positive und negative lonen zeitgleich durch zwei Elektroden geführt werden und durch zwei weitere Elektroden am Ende der Anordnung nachgewiesen werden. Diese IMS-Systeme, auch "Differential Mobility Spectrometer, DMS" oder "Field Asymmetrie Ion Mobility Spectrometer, FAIMS" genannt sind, werden zum Beispiel ausführlich bei A.A. Shvartsburg, "Differential Ion Mobility Spectrometry" (CRC Press, Boca Raton, 2009) beschrieben.

Von Nachteil bei der Verwendung aller dieser IMS ist aber, dass sie zur lonisierung radioaktive Quellen verwenden. Üblicherweise werden als radioaktive Materialien Tritium, Nickel-63, oder Americium-241 verwendet. Der Nachteil radioaktiver lonisationsquellen besteht darin, dass deren Verwendung gefährlich für die Umwelt und die Gesundheit des Personals bei der Produktion- und Serviceabteilung sein kann. Der Einsatz und der Vertrieb von Geräten, welche über radioaktive Quelle verfügen, sind mit gesetzlichen Auflagen verbunden, die sich von Land zu Land unterscheiden können. Die behördlichen Auflagen sind deshalb mit sehr hohen verwaltungstechnischen und finanziellen Auflagen verbunden.

Deshalb ist versucht worden, die radioaktiven lonenquellen zu ersetzen. So gibt es zum Beispiel lonenquellen, bei denen mit Gasentladungen ionisiert wird. Häufig wird die Koronaentladung eingesetzt, bei der aber andere lonisierungsprozesse ablaufen. Insbesondere werden zum Beispiel beim Einsatz von Luft, welches häufig als Träger- und Driftgas verwendet wird, Ozon und Stickoxide erzeugt, die wiederum durch andere lonisierungsprozesse und/oder chemischen Reaktionen sehr häufig die Bildung von Produktionen verhindern. Nachteilig ist auch, dass es bei Gasentladungen zu einer verstärkten Oxydierung von den metallischen Oberflächen im IMS kommt.

Deshalb wird seit Jahren versucht, nicht-radioaktive lonisierungsquellen aufzubauen, die die gleichen lonisierungsmechanismen und die gleichen chemischen Reaktionen wie bei den radioaktiven Quellen verwenden. Die lonisierung mit ß-Strahlung, wie zum Beispiel bei Ni-63 oder Tritium, kann zum Beispiel direkt durch Elektronenbeschuss, und die lonisierung mit γ-Strahlung kann zum Beispiel direkt durch Röntgenstrahlung imitiert werden. Bei der Patentschrift von Budovich et al. (DE 196 27 621 C2) wird eine lonenquelle beschrieben, bei der Elektronen in einer evakuierten Quellenkammer durch eine nicht-radioaktive Elektronenquelle erzeugt werden. Die Elektronen werden in einem elektrischen Feld beschleunigt, beispielsweise auf 20 Kiloelektronenvolt, und gelangen unter teilweiser Abbremsung durch ein für Gase undurchlässiges Fenster von der Quellenkammer in eine Reaktionskammer unter Atmosphärendruck.

Wie bei einer radioaktiven Elektronenquelle ionisieren die Elektronen das Gas in der Reaktionskammer. Glimmer ist als Fenstermaterial verwendet worden. Die Patentschrift von Döring (DE 101 20 335 C2) beschreibt einen ähnlichen Aufbau, bei dem die Elektronen in einer dünnen Membran aus Beryllium, welche metallisch beschichtet ist, abgebremst werden und die erzeugten Röntgenstrahlen zur lonisierung verwendet werden.

Es sind auch Elektronenquellen bekannt, die für Elektronen durchlässige und für Gas undurchlässige Fenster aus Siliziumnitrid aufweisen, deren Dicken weniger als 300 Nanometer betragen. Bäther et.al. (DE 10 2005 028 930 A1) beschreibt eine Kopplung dieser lonenquellen mit einem lonenmobilitätsspektrometer. Weitere Elektronenquellen dieser Art, welche mit Herstellmethoden der Halbleiterindustrie hergestellt werden, sind von F. Haase et.al. ("Electron permeable membranes for MEMS electron sources", Sensors and Actuators A, 132 (2006) 98-103) und von S. Zimmermann et.al (DE 10 2008 032 333 A1) beschrieben worden.

Diese Quellen zeichnen sich durch die gleichen lonisierungsmechanismen wie die der radioaktiven Quellen aus und können als Ersatz für radioaktive Quellen verwendet werden. Wie bei radioaktiven Quellen erfolgt die lonisierung der Zielmoleküle durch Ladungstransfer zwischen Clusterionen der Luft, also Reaktantionen, und dem Analyten, wobei die Reaktantionen nicht durch Alpha-, Betateilchen oder Gammastrahlen gebildet werden, sondern durch Elektronen oder Röntgenstrahlen.

Wie bei radioaktiven Quellen ist bei diesen Quellen nachteilig, dass einige sehr toxische Verbindungen, wie Benzol, Arsenwasserstoff oder Phosphin, nicht nachgewiesen werden können. Eine Vielzahl von organischen Molekülen, wie zum Beispiel Alkane und Alkene, oder auch Aromaten, wie Toluol oder Chlorbenzol, werden durch ihre geringen Protonenaffinitäten oder ihrer geringen Elektronegativitäten beziehungsweise gleiche Driftzeiten wie die Clusterionen, nicht detektiert. Nachteilig ist auch, dass der zu messende Konzentrationsbereich für viele Substanzen nach oben begrenzt und nur zu einem kleinen Teil linear ist.

Eine weitere Art der Erzeugung von lonen ist die lonisierung mit Photonen. Die lonisierung durch UV-Strahlung ist bekannt und wird zum Beispiel bei Photo-lonisations-Detektoren verwendet.

Die Photoionisation ermöglicht den Nachweis von Molekülen in einem weiten Konzentrationsbereich. Im Gegensatz zur lonisation mit radioaktiven Quellen, werden die Analyte mittels der Photonen direkt ionisiert. Typischerweise werden UV-Lampen mit einer lonisierungsenergie von 10,6 eV verwendet, so dass alle Moleküle mit lonisierungspotentialen kleiner beziehungsweise gleich dieser lonisierungsenergie ionisiert werden. Wie in der Patentschrift von RAE Systems (US 6 509 562 B2) gezeigt wird, können durch Verwendung unterschiedlicher UV-Quellen mit unterschiedlichen Energien selektiv Moleküle ionisiert und detektiert werden.

Nachteilig bei der Photoionisation ist, dass negative Ionen kaum gebildet werden, so dass zum Beispiel halogenierte Kohlenwasserstoffe in der Regel nicht nachgewiesen werden können. Da die Energie der UV-Strahlung geringer als die Ionisierungpotentiale von Stickstoff und Sauerstoff sind, wird bei Luft kein Signal erzeugt. Nachteilig ist somit, dass kein Reaktantionen-Peak (RIP) bei der Ionisierung mittels UV-Strahlung vorhanden ist und somit ein Peak für die interne Kalibrierung fehlt.

Einige der beschriebenen Nachteile können durch Kombinationen unterschiedlicher lonenquellen behoben werden. So wird zum Beispiel im Patent von Bensch et.al. (DE 100 42 394 B4) eine Kombination von radioaktiver Quelle und einer UV-Lampe mit einer Driftröhre beschrieben. Kombinationen von mindestens einer radioaktiven Quelle mit weiteren lonenquellen und mit verschiedenen Driftröhren werden zum Beispiel von von Döring et.al. (DE 197 30 896 C2) beschrieben.

Nachteilig bei diesen Anordnungen ist, dass weiterhin eine radioaktive Quelle verwendet wird. Weiterhin nachteilig ist, dass die radioaktiven Quellen sich nicht einfach ausschalten lassen. Der Nachweis von einigen Verbindungen, wie zum Beispiel Benzol, die die gleichen Driftzeiten der Clusterionen der Luft haben, gelingt somit nicht, wenn nur eine Driftröhre mit mindestens einer radioaktiven Quelle verwendet wird. Weiterhin nachteilig ist, dass der gleichzeitige Nachweis vieler toxischer Verbindungen nur bei der Verwendung von verschiedenen Ionenquellen mit verschiedenen Driftröhren möglich ist und dass diese Systeme dadurch komplex im Aufbau und nicht kostengünstig herzustellen sind.

Deswegen ist es anstrebenswert, eine nicht-radioaktive Ionenquelle, welche durch Elektronenbeschuss oder durch Röntgenstrahlung identische Spektren liefert, wie radioaktive Quellen, und alternativ auch mittels UV Strahlung identische Spektren liefert, wie Photoionisierungsquellen, mit einem Trenn- und Detektionsverfahren zu kombinieren. Weiterhin ist es anstrebenswert, diese nicht-radioaktive Ionenquelle entweder alternierend mit Elektronenbeziehungsweise mit Röntgen- oder mit UV-Strahlung zu betreiben.

Aus EP 2 006 672 A1 ist ein Verfahren und eine Vorrichtung zur Ionisierung und Identifizierung von Gasen bekannt, bei dem die zu identifizierenden Gase in einem Reaktionsraum ionisiert werden, wobei die Ionisierung, mittels UV-Strahlung und mittels Elektronen erfolgt.

Aus US 6,509,562 B1 ist bekannt, UV-Strahlung durch eine Gasentladung zu erzeugen.

EP 1 070 960 A2 offenbart eine Ionisationskammer mit einer nicht-radioaktiven lonisationsquelle, insbesondere für ein Ionenmobititätsspektrometer, mit einer nicht-radioaktiven Elektronenquelle.

Der Erfindung liegt daher die Aufgabe zugrunde, ein gattungsgemäßes Verfahren zur Ionisierung von Gasen sowie eine dazugehörige Vorrichtung zu entwickeln, welche über einen einfachen kompakten Aufbau die Ionisierung von Gasen bei Normaldruck mittels Elektronenbeschuss beziehungsweise Röntgenstrahlung oder UV-Strahlung erlaubt und die Ionen über ein Trenn- oder Separationsverfahren nachgewiesen werden. Die Ionenquelle ist erfindungsgemäß so entwickelt worden, dass insbesondere die Ionisierung durch den Elektronenbeschuss schnell ein- und ausgeschaltet werden kann.

Diese Aufgabe wird verfahrensseitig durch die Merkmale des Anspruchs 1 und vorrichtungsseitig durch die Merkmale des Anspruchs 9 gelöst. Zweckdienliche Ausgestaltungen ergeben sich aus den Unteransprüchen 2 bis 8 und 10 bis 17.

Das neue Verfahren zur Ionisierung und Identifizierung von Gasen sowie eine dazugehörige Vorrichtung beseitigen die genannten Nachteile des Standes der Technik.

Vorteilhaft bei der Anwendung des neuen Verfahrens zur Ionisierung und Identifizierung von Gasen ist es, dass die Ionisierung nicht-radioaktiv erfolgt und dass mit der Vorrichtung eine Ionisierung über Elektronen als auch über UV-Strahlung möglich ist.

In bevorzugter Ausgestaltung der Erfindung ist vorgesehen, dass die Ionisierung mittels Elektronen erfolgt, indem die Elektronen in einem Niederdruckbereich elektrisch beschleunigt werden und auf ein Elektronen-Fenster, welches für Elektronen durchlässig ist, beschleunigt werden, und dann in einem Hochdruckbereich Ionen erzeugen.

Darüber hinaus ist in bevorzugter Ausgestaltung der Erfindung vorgesehen, dass die Ionisierung mittels Elektronen indirekt erfolgt, indem die Elektronen in einem Niederdruckbereich elektrisch beschleunigt werden und auf ein Elektronen-Fenster beschleunigt werden, dort stark abgebremst werden und dabei Bremsstrahlung erzeugen, welche dann Ionen in einem Hochdruckbereich erzeugen.

Das neue Verfahren zur Ionisierung und Identifizierung von Gasen sowie die dazugehörige Vorrichtung kann auf verschiedene Weise realisiert werden. Diese Ausführungsbeispiele sollen anhand der zugehörigen Zeichnungen näher erläutert werden. Es zeigen:
- Figur 1: eine schematische Darstellung der neuartigen Ionenquelle mit Kopplung an einem lonenmobilitätsspektrometer;
- Figur 2: ein Spektrum eines lonenmobilitätsspektrometers beim Vermessen von Hexan mit einer radioaktiven Ionenquelle (keine Produkt-Ionen);
- Figur 3: ein Spektrum eines lonenmobilüätsspektrometers beim Vermessen von Hexan mit einer UV-lonenquelle (deutliche Produkt-lonen);
- Figur 4: eine schematische Darstellung einer anderen Variante der neuartigen lonenquelle mit Kopplung an einem lonenmobilitätsspektrometer;
- Figur 5: eine schematische Darstellung einer anderen miniaturisierten Variante der neuartigen lonenquelle und
- Figur 6: eine Ausführungsform einer miniaturisierten Variante der neuartigen lonenquelle.

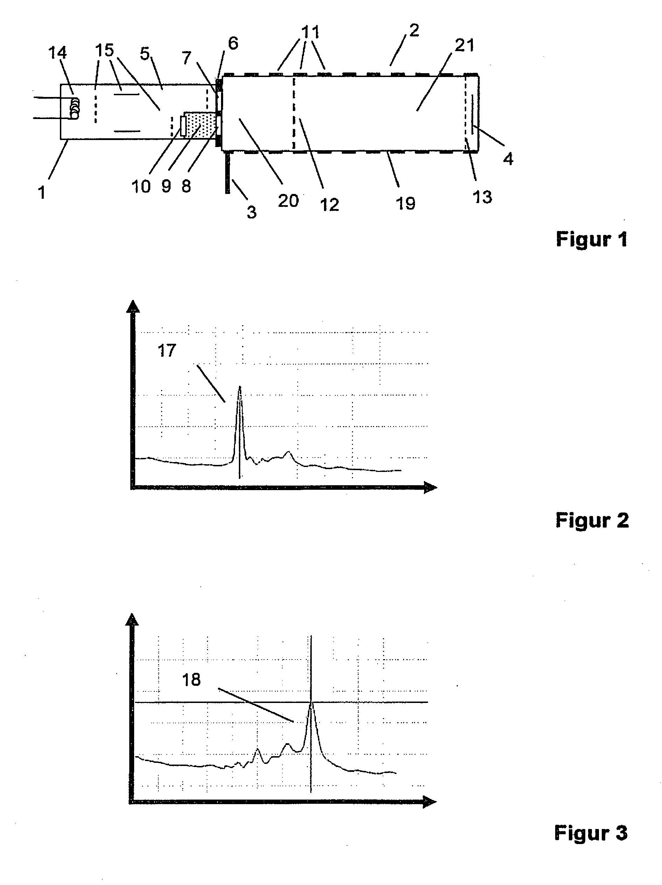

Die erfindungsgemäße Vorrichtung zur lonisierung von Gasen besteht in einem Ausführungsbeispiel, gemäß Figur 1, aus einer lonenquelle 1 und einem lonenmobilitätsspektrometer 2, welches eine Driftröhre 19, die einerseits durch ein Einlasssystem 3 mit lonenquelle 1 und andererseits durch einen Detektor 4 begrenzt ist, umfasst.

In der Driftröhre 19 befinden sich Driftelektroden 11 und ein elektrisches Tor 12, im Ausführungsbeispiel in der Bradbury-Nielsen Geometrie, wodurch der Innenraum der Driftröhre 19 in einen Reaktionsraum 20 und einen Driftraum 21 unterteilt ist. Vor dem Detektor 4 befindet sich ein Abschirmgitter 13, welches zur kapazitiven Entkopplung dient. Die Driftelektroden 11 sind jeweils elektrisch über Widerstände verbunden und somit als Gleichspannungselektroden ausgebildet. Die an den Driftelektroden 11 anliegenden Spannungen sind so ausgewählt, dass sich eine konstante Feldstärke in der Driftröhre 19 bilden kann.

Die lonenquelle 1 besteht aus einer vakuumdichten lonenquellenkammer 5, die mit dem Reaktionsraum 20 durch eine Trennwand 6 getrennt ist. Die Trennwand 6 enthält ein für Elektronen durchlässiges und für Gas undurchlässiges Fenster 7, welches aus einer ca. 100 nm bis 400 nm dünnen Silizium-Nitrid-Membran oder einer Diamant-Membran bestehen kann, und ein zweites für UV-Strahlung durchlässiges Fenster 8, welches aus MgF₂ bestehen kann.

Das Fenster 7 kann auch aus Beryllium, insbesondere metallisch beschichtetem Beryllium, bestehen.

In der lonenquellenkammer 5 befindet sich noch eine Gaskammer 9, welche vorzugsweise mit einem Edelgas bei Drücken größer beziehungsweise gleich Atmosphärendruck gefüllt ist. Diese Gaskammer 9 ist wiederum mit der Trennwand 6 verbunden. Auf der gegenüber liegenden Seite der Gaskammer 9 befindet sich ein weiteres für Elektronen durchlässiges Fenster 10.

In der lonenquellenkammer 5 aus der Anordnung in Figur 1 befindet sich ein Hochvakuum. In dieser Anordnung werden die Elektronen mittels einer Glühwendel 14 erzeugt. Die Elektrodenanordnung 15 zur Beschleunigung und Fokussierung der Elektronen wird so angebracht, dass die Elektronen entweder an der Gaskammer 9 vorbei direkt auf das Fenster 7 auftreffen und von dort in den Reaktionsraum 20 gelangen oder auf das Fenster 10 auftreffen, wo die Elektronen in die Gaskammer 9 eintreten und durch Wechselwirkung mit dem Gas UV-Strahlung erzeugen, welche wiederum über das UV-durchlässige Fenster 8 in den Reaktionsraum 20 eintreten kann. Die Beschleunigung der Elektronen erfolgt durch Hochspannungen im Bereich von 2 bis 50 keV.

Die Elektronen, die beschleunigt werden und durch das dünne Fenster 7 gelangen, werden hauptsächlich Luftmoleküle ionisieren. Über weiterführende Reaktionen und Anlagerungen mit Wassermolekülen werden Reaktant-lonen 17 gebildet. Diese Reaktant-lonen werden anschließend, über Protonentransfer-, Elektronentransfer- oder Protonenabstraktions-Reaktionen, die Moleküle der untersuchten chemischen Verbindung ionisieren und Produkt-lonen ausbilden. Dieser lonisierungsprozess verläuft sehr ähnlich zum lonisierungsprozess bei radioaktiven Quellen, so dass identische Spektren erhalten werden.

Die Elektronen, die beschleunigt werden und durch das dünne Fenster 10 gelangen, werden im Gas in der Gaskammer 9 abgebremst. Als geeignete Gase kommen Edelgase in Frage. Durch das Abbremsen der Elektronen im Edelgas entsteht eine Lichtemission im UV-Bereich, welche auf der Excimeremission von Edelgasen beruht. Bei Excimern handelt sich es sich um zweiatomare Moleküle, die nur im angeregten Zustand existieren. Die Excimeremission tritt nur bei Drücken von ca. 0,2 bar und mehr auf, wobei höhere Drücke ab ca. 1 bar bis 3 bar bevorzugt werden. Das UV-Spektrum der Excimeremission ist vom Edelgas abhängig. Ein Austausch des Edelgases führt somit zu anderen Lichtemissionen, die im Wellenlängenbereich von 200 nm und kleiner liegen können. Durch Mischung mit kleinen Mengen eines schwereren Edelgases kann das UV-Spektrum durch Energietransferprozesse verändert werden.

Durch eine Ablenkspannung in der Elektrodenanordnung 15 können die Elektronen abwechselnd in die Gaskammer, zur lonisierung mittels UV-Strahlung oder direkt durch das elektronendurchlässige Fenster 7 in den Reaktionsraum 20 gelangen.

In dieser Anordnung lässt sich die lonisierung mittels der Elektronen an- und ausschalten, gleichzeitig kann man aber auch die UV-Strahlung an- und ausschalten.

Somit ist ein schneller Wechsel innerhalb von Millisekunden zwischen Elektronen- und Photonenstrahlung, das heißt UV-Strahlung, möglich.

Die zu analysierenden Substanzen gelangen durch das Einlasssystem 3, welches zum Beispiel aus einer dünnen Silikonmembran bestehen kann, in den Reaktionsraum, wo sie entweder durch die Elektronen oder durch die UV-Strahlung ionisiert werden. Die in dem Reaktionsraum 20 erzeugten lonen werden durch das von den Driftelektroden 11 aufgebaute elektrische Feld in Richtung des elektrischen Tores 12 beschleunigt. Das elektrische Einlassgitter, zum Beispiel nach der Bradbury-Nielsen-Geometrie, besteht aus einer alternierenden Anordnung von elektrischen Leitungen, die durch ein elektrisches Feld zwischen den Leitungen das Durchdringen der lonen verhindert. Durch das Ausschalten der Spannung zwischen den elektrischen Leitungen für einige Mikrosekunden werden die lonen durch das elektrische Feld im Driftraum 21 kurzfristig angezogen. Nur ein Teil der lonen gelangt somit in den Driftraum 21, wo weitere Driftelektroden 11 die lonen zum Detektor 4 führen. Während des Transportes der lonen im elektrischen Feld stoßen diese ständig auf die neutralen Moleküle im Driftgas. Das Driftgas besteht in der Regel aus getrockneter Luft und wird über eine Pumpe gegen die Flugrichtung der lonen gefördert. Die Laufzeit der lanen ist unter anderem abhängig vom Stoßquerschnitt der lonen, kleine lonen kommen eher an den Detektor als große lonen. Die Intensität des Detektorsignals, das heißt die Anzahl der lonen, als Funktion der Flugzeit wird IMS-Spektrum genannt. Das elektrische Feld in der Driftröhre 19 kann auch umgepolt werden, so dass positive wie auch negative lonen gemessen werden können.

Figur 2 zeigt ein IMS-Spektrum von einem benzolhaltigen Gemisch, welches mit einer lonisierung mittels Elektronen gemessen worden ist. Das Spektrum zeigt im Wesentlichen nur den Reaktant-lonen-Peak 17, das heißt nur die Wassercluster. Benzol wird nicht erfasst. Das gleiche Gemisch liefert mittels der lonisierung mit der UV-Strahlung ein ganz anderes Spektrum, wie in Figur 3 zu sehen ist. Ein Produkt-lon ist hier mit 18 bezeichnet.

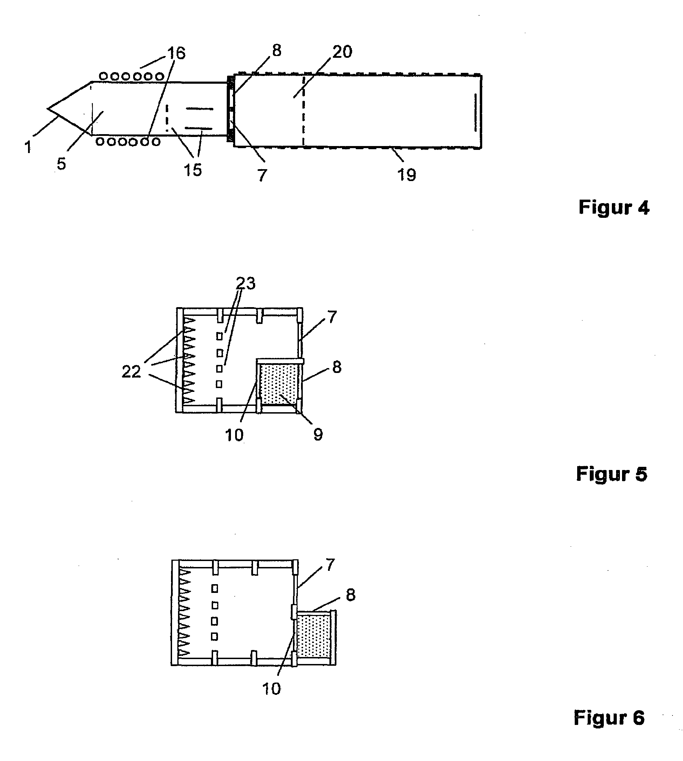

Ein weiteres Ausführungsbeispiel der neuen Vorrichtung zur lonisierung von Gasen wird in Figur 4 dargestellt.

Im Gegensatz zur Figur 1 befindet sich in der lonenquellenkammer 5 keine Gaskammer mehr, dafür befindet sich ein Gas in der lonenquellenkammer 5, vorteilsweise ein Edelgas und vorzugsweise bei einem Unterdruck im Bereich des Minimums der Paschen-Kurve, das heißt im Bereich von einigen Millibar. Die lonenquellenkammer ist aus einem nicht elektrisch leitenden Material, zum Beispiel aus Glas. Durch eine hohe Wechselspannung an den Radiofrequenzelektroden 16, welche an der lonenquellenkammer 5 angeordnet sind, wird in der lonenquellenkammer 5 eine Gasentladung gezündet, welche UV-Strahlen erzeugt. Diese UV-Strahlen können durch das UV-durchlässige Fenster 8 in den Reaktionsraum 20 gelangen. In der lonenquellenkammer 5 befindet sich noch mindestens eine Elektrodenanordnung 15 zur Extraktion der Elektronen aus der Gasentladung und zur Fokussierung der Elektronen auf das für Elektronen durchlässige Fenster 7. Die extrahierten Elektronen werden durch die Elektrodenanordnung 15 beschleunigt und können durch das für Elektronen durchlässige Fenster 7 in den Reaktionsraum 20 gelangen.

In der Driftröhre 19 befinden sich die gleichen Komponenten, wie sie zu Figur 1 beschrieben worden sind.

In der lonenquelle 1 wird durch die Gasentladung UV-Strahlung erzeugt, welche einige der Analyten direkt ionisieren kann.

Durch ein periodisches An- und Ausschalten der Spannung an der Elektrodenanordnung 15 zur Beschleunigung und Fokussierung der Elektronen lässt sich die lonisierung mittels der Elektronen an- und ausschalten. So lassen sich die Spektren, welche mit der UV-Strahlung erzeugt worden sind, mit Spektren, die mit der Elektronenstrahlung erzeugt worden sind, überlagern.

Selbstverständlich sind weitere Anordnungen zur lonisierung mittels der UV-Strahlung und der Elektronen möglich. So ist zum Beispiel eine Erzeugung von UV-Strahlung mittels einer Gleichspannung mit hohen Spannungen statt einer Wechselspannung möglich. Hierzu sind lediglich entsprechende Elektroden in die lonenquellenkammer einzuführen.

Weitere Ausführungsbeispiele der erfindungsgemäßen Vorrichtung zur lonisierung von Gasen werden in Figur 5 und Figur 6 dargestellt.

Im Gegensatz zur Figur 1 und Figur 4 wird die lonenquelle 1 mit Hilfe von Verfahren der Halbleitertechnik aufgebaut und die Elektronen werden nicht durch eine Glühwendel, sondern durch eine Anordnung von mehreren Feldemitterspitzen 22 erzeugt. Die Elektronen werden mit einem Gitter 23 beschleunigt und auf das für Elektronen durchlässige Fenster 7 beschleunigt, um von dort in den Reaktionsraum zu gelangen. Das Gitter 23 kann auch direkt auf dem Fenster 7 positioniert sein. Die Elektronen, die in Form eines breiten Strahles auch durch das zweite Fenster 10 gelangen, können teilweise in die Gaskammer 9 durchdringen, um dort UV-Strahlung zu erzeugen, welche wiederum durch das UV-durchlässige Fenster 8 in den Reaktionsraum gelangen.

Weitere geometrische Anordnungen dieser Quelle, wie in Figur 6 gezeigt, sind möglich. So ist zum Beispiel auch denkbar, dass das UV-durchlässige Fenster 8 und das für Elektronen durchlässige Fenster 7 nicht in einer Ebene liegen, sondern angewinkelt angeordnet sind, so dass der gleiche Bereich im Reaktionsraum ionisiert wird. Auch eine kreisrunde Anordnung ist denkbar, wo zum Beispiel eine Halbschale mit einem UV-durchlässigem Fenster und die andere Halbschale mit einem für Elektronen durchlässigen Fenster ausgestattet ist.

Weitere Anordnungen sind möglich, so ist zum Beispiel ist auch denkbar, dass die Elektronen in Figur 1, Figur 4, Figur 5 und Figur 6 mittels Photoeffekt erzeugt werden, das heißt, dass die Elektronen mit einer externen Lichtquelle erzeugt werden, indem die Photonen auf eine Fläche aus einem Material mit geringer Austrittsarbeit für Elektronen, welches in der lonenquelle 1 positioniert ist, gestrahlt werden. Die Elektronen können auch mittels einer Gasentladung, zum Beispiel einer Hohlkathodengasentladung, erzeugt werden und von dieser mittels einer Elektrodenanordnung extrahiert werden.

Statt einer lonisierung mittels der Elektronen, welche durch das dünne Fenster 7 in den Reaktionsraum 20 gelangen, kann eine Ionisierung auch mit Röntgenstrahlen, vorzugsweise niederenergetischen Röntgenstrahlen, erfolgen. Hierzu sind lediglich die Fenster 7 beziehungsweise 10 durch andere Fenster zu ersetzen, welche die Elektronen vollständig abbremsen. Dieses kann zum Beispiel durch dickere oder auch durch metallisch beschichtete Fenster erfolgen. Eine Erhöhung der Beschleunigungsspannung der Elektrodenanordnung 15 führt auch dazu, dass neben den Elektronen auch Röntgenstrahlen zur Ionisierung beitragen.

Die Lebensdauer der hier beschriebenen lonenquellen kann durch Hilfsmittel wie Gettermaterial, welches sich in den lonenquellenkammern befindet, erhöht werden.

Es ist auch denkbar, dass durch entsprechende Öffnungen in der Gaskammer 9 das Edelgas gewechselt oder modifiziert wird, so dass die UV-Strahlung und somit die lonisierungsenergien geändert werden, um somit eine optimale lonisierung für die Zielsubstanz zu ermöglichen.

Auch ist es denkbar, die Selektivität und Nachweisgrenze des Messverfahrens durch die Verwendung eines zusätzliches Reaktionsgases beziehungsweise Dopandgas, welches in die Reaktionsraum 20 geführt wird, zu optimieren. Mit diesem Reaktionsgas können bei lonisierung mittels Elektronenstöße chemische Reaktionen, welche zum Beispiel durch Protonenaffinitäten bei positiven lonen oder Elektronegativitäten bei negativen lonen gesteuert werden, beeinflusst werden, so dass die Selektivität des Verfahrens geändert wird. Verbesserungen der Nachweisgrenze bei Verwendung von Reaktionsgasen bei der lonisierung mittels UV-Strahlung sind auch bekannt.

Des Weiteren sind auch Kombinationen des lonenmobilitätsspektrometers mit anderen Sensoren beziehungsweise Detektoren und/oder mit weiteren Verfahren zur Steigerung der Selektivität, insbesondere zum Beispiel durch einen davor angeordneten Gaschromatographen, denkbar.

Mit der beschriebenen Erfindung lassen sich die Nachteile der bisherigen Verfahren beheben, da keine radioaktiven Substanzen benötigt werden, und dass mit dieser neuartigen lonenquelle sowohl Aromaten, wie Benzol, Toluol, Chlorbenzol und Aliphaten, sowie Arsenwasserstoff oder Phosphin, wie auch Halogenverbindungen nachgewiesen werden können, indem mit UV-lonisierung und zusätzlich mit Elektronen beziehungsweise Bremsstrahlung ionisiert wird. Beide lonisierungsarten lassen sich auch ein- und ausschalten, so dass eine viel größere Anzahl von Verbindungen detektiert werden und durch Vergleich der ermittelten Spektren auch besser identifiziert werden kann.

Die Verwendung der nicht-radioaktiven Quellen hat weiterhin den Vorteil, dass der Elektronenstrom in dem Reaktionsraum größer sein kann als der einer radioaktiven Quelle, da letztere in ihrer Aktivität durch gesetzliche Vorschriften mit ihrer Freigrenze beschränkt ist. Dadurch lassen sich durch die neue lonenquelle deutlich niedrigere Nachweisgrenzen ermöglichen.

Zur Verbesserung der Nachweisgrenze ist auch eine Kopplung mehrerer lonenquellen mit einem Detektor denkbar, letzteres ist insbesondere bei den miniaturisierten Ausführungsformen von Vorteil.

Selbstverständlich ist die Kopplung der beschriebenen lonenquellen auch mit anderen Spektrometern realisierbar. Hierzu gehören die anderen IMS-Bauarten, wie zum Beispiel "Differential Mobility"-Spektrometer, aber auch Massenspektrometer, wie die "Time of Flight (TOF)"-, Quadrupol- und lonenfallenmassenspektrometer. Insbesondere bei der Kopplung mit Massenspektrometern ist mit dieser lonenquelle der Einsatz in Hochdruckbereichen des Einlasses möglich, so dass bessere Nachweisgrenzen erzielt werden können und auch hier eine alternierende lonisierung mit UV-Strahlung und Elektronenstoß möglich ist.

### Liste der Bezugszeichen

- 1: lonenquelle
- 2: lonenmobilitätsspektrometer
- 3: Einlasssystem
- 4: Detektor
- 5: lonenquellenkammer
- 6: Trennwand
- 7: Elektronen-Fenster
- 8: UV-Strahlung durchlässiges Fenster
- 9: Gaskammer
- 10: zweites Elektronen-Fenster
- 11: Driftelektroden
- 12: elektrisches Tor
- 13: Abschirmgitter
- 14: Glühwendel
- 15: Elektrodenanordnung
- 16: Radiofrequenzelektroden
- 17: Reaktant-lon
- 18: Produkt-lon
- 19: Driftröhre
- 20: Reaktionsraum
- 21: Driftraum
- 22: Feldemissionsspitzen
- 23: Beschleunigungsgitter

## Patentansprüche

1. Verfahren zur Ionisierung und Identifizierung von Gasen, bei dem die zu identifizierenden Gase in einem Reaktionsraum (20) ionisiert und die Produkt-Ionen gemessen werden, wobei die Messung der Produkt-Ionen durch die Einwirkung elektrischer Felder auf den Produkt-Ionen erfolgt und der Nachweis mit einem Detektor für Ionen durchgeführt wird, **dadurch gekennzeichnet, dass** die Ionisierung mittels UV-Strahlung erfolgt und dass zeitgleich oder aufeinander folgend eine Ionisierung mittels Elektronenbeschuss oder Röntgenstrahlung erfolgt, wobei die Elektronen aus einer Elektronenquelle (1) auf
a) ein Elektronen-Fenster (7) beschleunigt werden, das Fenster (7) durchdringen oder, beziehungsweise und am Fenster abgrebremst Bremsstrahlung erzeugen und im Reaktionsraum (20) Moleküle ionisiert werden, und/oder auf
b) ein zweites Elektronen-Fenster (10) beschleunigt werden, das Fenster (10) durchdringen und in einer Hochdruckkammer UV-Strahlen erzeugen, die UV-Strahlen durch ein UV-durchlässiges Fenster (8) gelangen und im Reaktionsraum (1) Moleküle ionisiert werden.

2. Verfahren nach Anspruch 1, **dadurch gekennzeichnet, dass** die Ionisierung mittels Elektronenbeschuss erfolgt, indem die Elektronen in einem Niederdruckbereich elektrisch beschleunigt werden und auf das Elektronen-Fenster (7), welches für Elektronen durchlässig ist, beschleunigt werden, dieses Fenster (7) durchdringen, und dann in einem Hochdruckbereich Ionen erzeugen.

3. Verfahren nach Anspruch 1, **dadurch gekennzeichnet, dass** die Ionisierung mittels Elektronenbeschuss indirekt erfolgt, indem die Elektronen in einem Niederdruckbereich elektrisch beschleunigt werden und auf das Elektronen-Fenster (7) beschleunigt werden, dort stark abgebremst werden und dabei Bremsstrahlung erzeugen, welche dann Ionen in einem Hochdruckbereich erzeugen.

4. Verfahren nach Anspruch 2 oder 3, **dadurch gekennzeichnet, dass** die UV-Strahlen mittels einer Gasentladung erzeugt werden und dass die Elektronen aus der Gasentladung mittels einer Elektrodenanordnung (15) herausgezogen werden und auf das Elektronen-Fenster (7) fokussiert werden.

5. Verfahren nach einem der Ansprüche 2 bis 4, **dadurch gekennzeichnet, dass** während der Ionisierung mit UV-Strahlen die Ionisierung mittels Elektronen diskontinuierlich erfolgt, indem die Elektronen nur für bestimmte Zeiten auf das Elektronen-Fenster (7) geführt werden.

6. Verfahren nach einem der Ansprüche 2 bis 5, **dadurch gekennzeichnet, dass** die Ionisierung mittels UV-Strahlung und mittels Elektronenbeschuss diskontinuierlich erfolgt, indem
a) die Elektronen auf das für Elektronen durchlässige Fenster (7) geführt werden und somit in dem Reaktionsraum (1) Ionen erzeugen und
b) zeitlich nachfolgend die Elektronen nur für bestimmte Zeiten auf das zweite Elektronen-Fenster (10) geführt werden und diese Elektronen in der Gaskammer (9) durch Wechselwirkung mit den in der Gaskammer (9) vorhandenen Gasen UV-Strahlung erzeugen, welche dann durch das UV-durchlässige Fenster (8) in den Reaktionsraum (20) gelangt, so dass entweder mit Elektronen oder mit UV-Strahlung ionisiert wird oder, während mit einer der beiden Ionisierungsarten kontinuierlich ionisiert wird, die zweite Ionisierungsart kurzfristig dazu geschaltet wird.

7. Verfahren nach einem der vorhergehenden Ansprüche, **dadurch gekennzeichnet, dass** die Ionisierung mittels UV-Strahlung und mittels Elektronenbeschuss diskontinuierlich in einigen Millisekunden alternierend erfolgt.

8. Verfahren nach einem der vorhergehenden Ansprüche, **dadurch gekennzeichnet, dass** zur Identifizierung der Substanzen die Spektren, die mit Ionisierung mittels UV-Strahlung, und die Spektren, die mit Ionisierung mittels Elektronenbeschuss gemessen worden sind, gemeinsam herangezogen werden und die Substanzen mittels Methoden zum Datenbankvergleich identifiziert werden.

9. Vorrichtung zur Ionisierung und Identifizierung von Gasen, die eine lonenquellenkammer (5) mit einer Ionenquelle (1) und einem lonenmobilitätsspektrometer (2) umfasst, **dadurch gekennzeichnet, dass** eine Trennwand (6) zwischen der Ionenquellenkammer (5) und dem lonenmobilitätsspektrometer (2) ein für UV-Strahlung durchlässiges Fenster (8) und ein für Elektronen durchlässiges Fenster (7) aufweist, wobei in der Ionenquellenkammer (5) mittels der Ionenquelle (1) eine UV-Strahlung und eine Elektronen-Strahlung erzeugbar ist.

10. Vorrichtung nach Anspruch 9, **dadurch gekennzeichnet, dass** sich in der lonenquellenkammer (5) ein Edelgas unter optimalem Druck für eine Gasentladung befindet, insbesondere im Millibar-Bereich, und ein Fenster (8) zum Beispiel aus Magnesium-Fluorid oder CalciumFluorid, welches durchlässig für die UV-Strahlung der Gasentladung ist, die lonenquellenkammer (5) zu einem Reaktionsraum (20) begrenzt, ein weiteres Fenster (7), das Elektronen-Fenster, welches durchlässig für Elektronen ist und zum Beispiel aus Silizium-Nitrid, Diamant oder Beryllium gefertigt ist, sich neben dem für UV-Strahlung durchlässigen Fenster (8) befindet, und dass sich in der Ionenquellenkammer (5) Elektroden (15) zur Beschleunigung und Fokussierung der Elektronen aus der Gasentladung auf das Fenster (7) befinden.

11. Vorrichtung nach Anspruch 9, **dadurch gekennzeichnet, dass** sich in der lonenquellenkammer (5) ein Hochvakuum befindet, insbesondere mit einem Druck kleiner als 10⁻⁶ Millibar, die Ionenquellenkammer (5) durch zwei Elektronen-Fenster (7, 10), welche für Elektronen durchlässig sind, begrenzt ist, wobei ein Fenster (7) direkt an den Reaktionsraum (20) angrenzt und das andere Fenster (10) an eine Hochdruckkammer (9) angrenzt, sich in dieser Hochdruckkammer (9) ein Edelgas mit einem Druck größer als 0,1 bar befindet und die Hochdruckkammer (9) über ein für UV-Strahlung durchlässiges Fenster (8) mit dem Reaktionsraum (20) angrenzt.

12. Vorrichtung nach einem der Ansprüche 9 bis 11, **dadurch gekennzeichnet, dass** das Elektronen-Fenster (7) Elektronen abbremst und durchlässig für Bremsstrahlung ist und insbesondere aus metallisch beschichtetem Beryllium gefertigt ist.

13. Vorrichtung nach einem der Ansprüche 9 bis 12, **dadurch gekennzeichnet, dass** sich in der Ionenquellenkammer (5) eine Elektrodenanordnung (15) befindet, welche die Elektronen beschleunigt und die Elektronen auf die Elektronen-Fenster (7, 10) zuführt beziehungsweise von diesen ablenkt.

14. Vorrichtung nach einem der Ansprüche 9 bis 13, **dadurch gekennzeichnet, dass** sich eine Elektronenquelle, bestehend aus einem Material mit geringer Austrittsarbeit für Elektronen, in der Ionenquellenkammer (5) befindet und dass eine oder mehrere externe Lichtquellen an der Ionenquellenkammer (5) positioniert sind, welche Photonen erzeugen, die an der Elektronenquelle über den Photoeffekt Elektronen freisetzen.

15. Vorrichtung nach einem der Ansprüche 9 bis 14, **dadurch gekennzeichnet, dass** das UV-durchlässige Fenster (8) nicht in einer Ebene mit dem Elektronen-Fenster (7) angeordnet ist und dass beide Fenster (7, 8) so angeordnet sind, dass die UV-Strahlung und die Elektronen beziehungsweise Bremsstrahlung in dem Reaktionsraum (20) sich überschneiden können.

16. Vorrichtung nach einem der Ansprüche 9 bis 15, **dadurch gekennzeichnet, dass** die Ionenquellenkammer (5) mit der Reaktionskammer (20) eines lonenmobilitätsspektrometers (2) gekoppelt ist.

17. Vorrichtung nach Anspruch 9 bis 15, **dadurch gekennzeichnet, dass** die lonenquellenkammer (5) mit der Reaktionskammer (20), beziehungsweise dem Einlassbereich eines Massenspektrometers, insbesondere direkt an einer Einlasskapillare oder an einer Einlassblende, gekoppelt ist.

## Claims

1. A method for ionising and identifying gases, in which the gases to be identified are ionised in a reaction chamber (20) and the product ions are measured, wherein the measurement of the product ions takes place by exposing the product ions to electric fields and the detection is carried out using a detector for ions, **characterised in that** the ionisation takes place by means of UV radiation, and **in that** an ionisation by means of electron bombardment or X-ray radiation takes place simultaneously or one after the other, wherein the electrons from an electron source (1)
a) are accelerated onto an electron window (7), pass through the window (7) or/and are braked at the window and generate braking radiation, and molecules are ionised in the reaction chamber (20), and/or
b) are accelerated onto a second electron window (10), pass through the window (10) and generate UV rays in a high-pressure chamber, the UV rays pass through a UV-permeable window (8) and molecules are ionised in the reaction chamber (1).

2. The method according to claim 1, **characterised in that** the ionisation takes place by means of electron bombardment **in that** the electrons are electrically accelerated in a low-pressure region and are accelerated onto the electron window (7) which is permeable to electrons, pass through this window (7) and then generate ions in a high-pressure region.

3. The method according to claim 1, **characterised in that** the ionisation takes place indirectly by means of electron bombardment **in that** the electrons are electrically accelerated in a low-pressure region and are accelerated onto the electron window (7), are significantly braked there and in the process generate braking radiation, which then generates ions in a high-pressure region.

4. The method according to claim 2 or 3, **characterised in that** the UV rays are generated by means of a gas discharge, and **in that** the electrons are extracted from the gas discharge by means of an electrode arrangement (15) and are focused onto the electron window (7).

5. The method according to any of claims 2 to 4, **characterised in that**, during the ionisation with UV rays, the ionisation by means of electrons takes place discontinuously in that the electrons are guided onto the electron window (7) only for given times.

6. The method according to any of claims 2 to 5, **characterised in that** the ionisation by means of UV radiation and by means of electron bombardment takes place discontinuously **in that**
a) the electrons are guided onto the electron-permeable window (7) and thus generate ions in the reaction chamber (1), and
b) thereafter the electrons are guided onto the second electron window (10) only for given times and these electrons generate UV radiation in the gas chamber (9) as a result of interaction with the gases present in the gas chamber (9), which UV radiation then passes through the UV-permeable window (8) into the reaction chamber (20) so that ionisation takes place either by electrons or by UV radiation or, while ionisation by one of the two types of ionisation takes place continuously, the second type of ionisation is briefly switched on in addition.

7. The method according to any of the preceding claims, **characterised in that** the ionisation by means of UV radiation and by means of electron bombardment takes place discontinuously in a manner alternating every few milliseconds.

8. The method according to any of the preceding claims, **characterised in that**, in order to identify the substances, the spectra that have been measured by ionisation by means of UV radiation and the spectra that have been measured by ionisation by means of electron bombardment are considered jointly and the substances are identified by means of database comparison methods.

9. A device for ionising and identifying gases, which comprises an ion source chamber (5) having an ion source (1) and an ion mobility spectrometer (2), **characterised in that** a partition (6) between the ion source chamber (5) and the ion mobility spectrometer (2) has a window (8) permeable to UV radiation and a window (7) permeable to electrons, wherein UV radiation and electron radiation can be generated in the ion source chamber (5) by means of the ion source (1).

10. The device according to claim 9, **characterised in that** a noble gas is located in the ion source chamber (5) under optimal pressure for gas discharge, in particular in the millibar range, and a window (8) for example made of magnesium fluoride or calcium fluoride, which is permeable to the UV radiation of the gas discharge, delimits the ion source chamber (5) from a reaction chamber (20), a further window (7), the electron window, which is permeable to electrons and is made for example of silicon nitride, diamond or beryllium, is located next to the window (8) permeable to UV radiation, and **in that** electrodes (15) for accelerating and focusing the electrons from the gas discharge onto the window (7) are located in the ion source chamber (5).

11. The device according to claim 9, **characterised in that** a high vacuum prevails in the ion source chamber (5), in particular having a pressure of less than 10⁻⁶ millibar, the ion source chamber (5) is delimited by two electron windows (7, 10) which are permeable to electrons, wherein one window (7) directly adjoins the reaction chamber (20) and the other window (10) adjoins a high-pressure chamber (9), a noble gas at a pressure greater than 0.1 bar is located in this high-pressure chamber (9), and the high-pressure chamber (9) adjoins the reaction chamber (20) via a window (8) that is permeable to UV radiation.

12. The device according to any of claims 9 to 11, **characterised in that** the electron window (7) brakes electrons and is permeable to braking radiation and is made in particular of metal-coated beryllium.

13. The device according to any of claims 9 to 12, **characterised in that** an electrode arrangement (15) is located in the ion source chamber (5), which electrode arrangement accelerates the electrons and guides the electrons onto the electron windows (7, 10) or deflects the electrons away therefrom.

14. The device according to any of claims 9 to 13, **characterised in that** an electron source, consisting of a material having a low work function for electrons, is located in the ion source chamber (5), and **in that** one or more external light sources are positioned on the ion source chamber (5), which generate photons that release electrons at the electron source by way of the photoelectric effect.

15. The device according to any of claims 9 to 14, **characterised in that** the UV-permeable window (8) is not arranged in a plane with the electron window (7), and **in that** the two windows (7, 8) are arranged in such a way that the UV radiation and the electrons and/or braking radiation can intersect one another in the reaction chamber (20).

16. The device according to any of claims 9 to 15, **characterised in that** the ion source chamber (5) is coupled to the reaction chamber (20) of an ion mobility spectrometer (2).

17. The device according to claims 9 to 15, **characterised in that** the ion source chamber (5) is coupled to the reaction chamber (20) or to the inlet region of a mass spectrometer, in particular directly to an inlet capillary or to an inlet aperture.

## Revendications

1. Procédé d'ionisation et d'identification de gaz, dans lequel les gaz à identifier sont ionisés dans une chambre de réaction (20) et les ions du produit sont mesurés, la mesure des ions du produit étant effectuée par l'action de champs électriques sur les ions du produit, et la mise en évidence étant réalisée avec un détecteur d'ions, **caractérisé en ce que** l'ionisation est effectuée au moyen d'un rayonnement UV et **en ce qu'**une ionisation est effectuée simultanément ou de façon successive au moyen d'un bombardement électronique ou d'un rayonnement X, les électrons en provenance d'une source d'électrons (1)
a) étant accélérés sur une fenêtre à électrons (7), traversant la fenêtre (7) ou, respectivement et, étant freinés sur la fenêtre, produisant un rayonnement de freinage, et des molécules étant ionisées dans la chambre de réaction (1), et/ou
b) étant accélérés sur une deuxième fenêtre à électrons (10), traversant la fenêtre (10) et produisant dans une chambre haute pression des rayons UV, les rayons UV traversant une fenêtre (8) perméable aux UV, et des molécules étant ionisées dans la chambre de réaction (1).

2. Procédé selon la revendication 1, **caractérisé en ce que** l'ionisation est effectuée au moyen d'un bombardement électronique par le fait que les électrons sont accélérés électriquement dans une zone basse pression et sont accélérés sur la fenêtre à électrons (7) qui est perméable aux électrons, traversent cette fenêtre (7) et produisent ensuite des ions dans une zone haute pression.

3. Procédé selon la revendication 1, **caractérisé en ce que** l'ionisation est effectuée indirectement au moyen d'un bombardement électronique par le fait que les électrons sont accélérés électriquement dans une zone basse pression et sont accélérés sur la fenêtre à électrons (7), sont fortement freinés à cet endroit et produisent ce faisant un rayonnement de freinage qui produit ensuite des ions dans une zone haute pression.

4. Procédé selon la revendication 2 ou 3, **caractérisé en ce que** les rayons UV sont produits au moyen d'une décharge gazeuse et **en ce que** les électrons sont extraits de la décharge gazeuse au moyen d'un dispositif d'électrode (15) et sont focalisés sur la fenêtre à électrons (7).

5. Procédé selon une des revendications 2 à 4, **caractérisé en ce que**, pendant l'ionisation avec des rayons UV, l'ionisation au moyen d'électrons est effectuée de façon discontinue par le fait que les électrons ne sont conduits sur la fenêtre à électrons (7) que pendant des temps définis.

6. Procédé selon une des revendications 2 à 5, **caractérisé en ce que** l'ionisation est effectuée au moyen d'un rayonnement UV et au moyen d'un bombardement électronique de façon discontinue par le fait que
a) les électrons sont conduits sur fa fenêtre (7) perméable aux électrons et produisent ainsi des ions dans la chambre de réaction (1) et,
b) par la suite, les électrons ne sont conduits à la deuxième fenêtre à électrons (10) que pendant des temps définis, et ces électrons produisent dans la chambre à gaz (9) un rayonnement UV par interaction avec les gaz présents dans la chambre à gaz (9), lequel rayonnement UV parvient ensuite dans la chambre de réaction (20) à travers la fenêtre (8) perméable aux UV de telle sorte qu'il se produit une ionisation soit avec des électrons soit avec le rayonnement UV, ou de telle façon que, pendant qu'une ionisation est effectuée de façon continue avec un des deux types d'ionisation, le deuxième type d'ionisation vient s'y ajouter brièvement.

7. Procédé selon une des revendications précédentes, **caractérisé en ce que** l'ionisation est effectuée de façon alternée au moyen d'un rayonnement UV et au moyen d'un bombardement électronique, de façon discontinue, en quelques millisecondes.

8. Procédé selon une des revendications précédentes, **caractérisé en ce que**, pour l'identification des substances, il est fait appel en commun aux spectres qui ont été mesurés par ionisation au moyen du rayonnement UV et aux spectres qui ont été mesurés par ionisation au moyen d'un bombardement électronique, et les substances sont identifiées an moyen de méthodes de comparaison de base de données.

9. Dispositif d'ionisation et d'identification de gaz, qui comprend une chambre de source d'ions (5) avec une source d'ions (1) et un spectromètre à mobilité ionique (2), **caractérisé en ce qu'**une cloison (6) entre la chambre de source d'ions (5) et le spectromètre à mobilité ionique (2) présente une fenêtre (8) perméable au rayonnement UV et une fenêtre (7) perméable aux électrons, un rayonnement UV et un rayonnement électronique pouvant être produits dans la chambre de source d'ions (5) au moyen de la source d'ions (1).

10. Dispositif selon la revendication 9, **caractérisé en ce qu'**il y a dans la chambre de source d'ions (5) un gaz rare sous une pression optimale pour une décharge gazeuse, en particulier dans la plage des millibars, et **en ce qu'**une fenêtre (8), par exemple en fluorure de magnésium ou en fluorure de calcium, qui est transparente au rayonnement UV de la décharge gazeuse, limite la chambre de source d'ions (5) par rapport à une chambre de réaction (20), **en ce qu'**une autre fenêtre (7), la fenêtre à électrons, qui est perméable aux électrons et qui est par exemple réalisée en nitrure de silicium, en diamant ou en béryllium, est située près de la fenêtre (8) perméable au rayonnement UV, et **en ce que**, dans la chambre de source d'ions (5), il y a des électrodes (15) pour l'accélération et la focalisation, sur la fenêtre (7), des électrons en provenance de la décharge gazeuse.

11. Dispositif selon la revendication 9, **caractérisé en ce qu'**il y a un vide poussé dans la chambre de source d'ions (5), en particulier avec une pression inférieure à 10⁻⁶ millibars, **en ce que** la chambre de source d'ions (5) est limitée par deux fenêtres à électrons (7, 10) qui sont perméables aux électrons, une fenêtre étant directement adjacente à la chambre de réaction (20) et l'autre fenêtre (10) étant adjacente à une chambre haute pression (9), **en ce qu'**il y a dans cette chambre haute pression (9) un gaz rare avec une pression supérieure à 0,1 bar, et **en ce que** la chambre haute pression (9) est adjacente à la chambre de réaction (20) par le biais d'une fenêtre (8) perméable au rayonnement UV.

12. Dispositif selon une des revendications 9 à 11, **caractérisé en ce que** la fenêtre à électrons (7) freine des électrons et est perméable au rayonnement de freinage et est en particulier réalisée en béryllium doté d'un revêtement métallique.

13. Dispositif selon une des revendications 9 à 12, **caractérisé en ce qu'**il y a dans la chambre de source d'ions (5) un dispositif d'électrode (15) qui accélère les électrons et qui conduit les électrons sur les fenêtres à électrons (7, 10) ou respectivement qui les en dévie.

14. Dispositif selon une des revendications 9 à 13, **caractérisé en ce qu'**une source d'électrons, composée d'un matériau ayant un faible travail de sortie pour les électrons, est située dans la chambre de source d'ions (5), et **en ce qu'**une ou plusieurs sources de lumière externes sont positionnées sur la chambre de source d'ions (5) et produisent des photons qui libèrent des électrons au niveau de la source d'électrons par le biais de l'effet photoélectrique.

15. Dispositif selon une des revendications 9 à 14, **caractérisé en ce que** la fenêtre (8) perméable aux UV n'est pas disposée dans le même plan que la fenêtre à électrons (7) et **en ce que** les deux fenêtres (7, 8) sont disposées de telle sorte que le rayonnement UV et les électrons ou respectivement le rayonnement de freinage peuvent se chevaucher dans la chambre de réaction (20).

16. Dispositif selon une des revendications 9 à 15, **caractérisé en ce que** la chambre de source d'ions (5) est couplée à la chambre de réaction (20) d'un spectromètre à mobilité ionique (2).

17. Dispositif selon les revendications 9 à 15, **caractérisé en ce que** la chambre de source d'ions (5) est couplée à la chambre de réaction (20), ou respectivement à la zone d'entrée d'un spectromètre de masse, en particulier directement au niveau d'un capillaire d'entrée ou au niveau d'un obturateur d'entrée.
